# EUROPÄISCHE PATENTSCHRIFT

(11) **EP 3 230 650 B1**
(45) Veröffentlichungstag und Bekanntmachung des Hinweises auf die Patenterteilung: **23.09.2020**
(21) Anmeldenummer: 15808078.8
(22) Anmeldetag: 23.11.2015
(51) Int. Cl.: F21S 41/275

(54) **SCHEINWERFER FÜR FAHRZEUGE**
HEADLIGHT FOR VEHICLES
PHARE POUR VÉHICULES

(30) Priorität: 10.12.2014 AT 508942014
(43) Veröffentlichungstag der Anmeldung: 18.10.2017
(73) Patentinhaber: ZKW Group GmbH, 3250 Wieselburg (AT)
(72) Erfinder: TAUDT, Lukas, A-3250 Wieselburg (AT)
(74) Vertreter: Patentanwaltskanzlei Matschnig & Forsthuber OG
(86) Internationale Anmeldenummer: PCT/AT2015/050297
(87) Internationale Veröffentlichungsnummer: WO 2016/090397

(56) Entgegenhaltungen:
- EP-A1- 1 980 787
- EP-A2- 0 390 208
- EP-A2- 2 280 215
- DE-A1- 10 309 434
- DE-U1- 9 000 395
- DE-U1- 9 000 395
- DE-U1-202005 004 080
- DE-U1-202005 004 080
- JP-A- 2011 249 056
- JP-B2- 3 223 797
- JP-B2- 3 223 797
- KR-B1- 101 410 878
- KR-B1- 101 410 878

## Beschreibung

Die Erfindung bezieht sich auf einen Scheinwerfer für Fahrzeuge mit zumindest einem Primäroptikelement, welches zumindest eine Lichtaustrittsfläche aufweist, mit zumindest einer, dem zumindest einen Primäroptikelement zugeordneten Sekundärlinse zur Abbildung der zumindest einen Lichtaustrittsfläche als Lichtbild auf die Straße, wobei die zumindest eine Sekundärlinse eine bevorzugt asphärische vordere Lichtaustrittsfläche, eine hintere Lichteintrittsfläche sowie im Wesentlichen ebene Begrenzungsflächen zwischen der vorderen Lichtaustrittsfläche und der hinteren Lichteintrittsfläche besitzt.

Ein Scheinwerfer dieser Art ist aus der AT 508604 der Anmelderin bekannt geworden. Bei diesem Scheinwerfer sind Sekundärlinsen vorgesehen, bei welchen zwischen einer planen hinteren Linsenfläche und einer asphärisch gekrümmten vorderen Linsenfläche vier ebene Begrenzungs- oder Beschnittflächen vorhanden sind, welche mit der vorderen Linsenfläche scharfe Kanten erzeugen. Die obere und untere Kante erzeugen dabei in dem Lichtbild unerwünschte Effekte, die sich aus der Abbildung der Begrenzungen der Lichtaustrittsflächen der Lichtquellenmodule ergeben und sich als Streifen unterschiedlicher Farbe und Leuchtdichte im Lichtbild manifestieren.

Weiters gehen aus den Dokumenten EP 1 818 599 A2 und WO 2013/020156 A1 jeweils Scheinwerfermodule für Kraftfahrzeuge mit zumindest einer Primär- und einer Sekundäroptik hervor. Als Lichtquellen sind LEDs vor der Primäroptik angeordnet. Die optisch nachgeschaltete Sekundäroptik besteht aus einer Linse mit komplexer, segmentierter Lichtaustrittsflächenform bzw. aus einer Linse mit konventionellerer Lichtaustrittsflächenform. Die Seitenflächen (Begrenzungsflächen) sind bei beiden Ausführungsformen ebene, winkelige Flächen. Die Übergänge der Lichtaustrittsflächen in die Seitenflächen sind bei beiden Sekundärlinsen somit G0-stetig (Kanten).

Das Dokument EP 1 916 470 A2 offenbart ebenfalls ein Scheinwerfermodul für Kraftfahrzeuge. Allerdings besitzt dieses Modul kein Primäroptikelement, wenn man die optischen Eigenschaften der LED-Gehäuse des LED-Arrays außer Acht lässt. Das Modul weist eine über dem LED-Array angeordnete Linse auf, deren zentrale Lichtaustrittsfläche zur kegelstumpfförmigen Seitenwand offenbar nur einen GO-stetigen Übergang aufweist.

Eine Aufgabe der Erfindung liegt in einer Minderung der obengenannten unerwünschten Effekte und in einer gezielten Änderung der Lichtverteilung im Lichtbild durch eine geänderte Gestaltung der Sekundärlinse bzw. Sekundärlinsen.

Diese Aufgabe wird mit einem Scheinwerfer der oben angegebenen Art gelöst, bei welchem erfindungsgemäß im Übergangsbereich einer oberen und/ oder unteren Begrenzungsfläche mit der vorderen Lichtaustrittsfläche eine Kantenverrundung vorgesehen ist, deren Fläche G1-stetig ist, wobei der Krümmungsradius im Bereich von 2 bis 30 % des Krümmungsradius der Lichtaustrittsfläche der zumindest einen Sekundärlinse liegt.

Im Sinne einer weichen und besonders gleichmäßigen Lichtverteilung ist es erfindungsgemäß vorgesehen, dass die Kantenverrundung im Übergangsbereich einer oberen und/oder unteren Begrenzungsfläche mit der vorderen Lichtaustrittsfläche zumindest G2-stetig ist.

Falls die Kantenverrundung im Übergangsbereich einer oberen Begrenzungsfläche mit der vorderen Lichtaustrittsfläche ausgebildet ist, lässt sich eine störende horizontale und helle Lichtlinie im Lichtbild zumindest weitgehend vermeiden.

Andererseits kann man vorsehen, dass die Kantenverrundung im Übergangsbereich einer unteren Begrenzungsfläche mit der vorderen Lichtaustrittsfläche ausgebildet ist, um dadurch die obere Grenze des Leuchtbildes nach oben zu verschieben.

Bei einer sehr bewährten Ausführungsform eines Scheinwerfers ist eine Mehrzahl von Primäroptikelementen mit je mehreren Lichtaustrittsflächen vorgesehen, wobei jedem Primäroptikelement eine Sekundärlinse zugeordnet ist.

In diesem Fall kann zweckmäßigerweise vorgesehen sein, dass jedes Primäroptikelement Vorsatzoptiken besitzt, in welche Licht aus LED-Lichtquellen von hinten eingekoppelt aus den vorderen Lichtaustrittsflächen austritt.

Die Erfindung samt weiteren Vorteilen ist im Folgenden an Hand beispielsweiser Ausführungsformen näher erläutert, die in der Zeichnung veranschaulicht sind. In dieser zeigen
Fig. 1 in einer schaubildlichen Explosionsdarstellung einen Scheinwerfer nach dem Stand der Technik,
Fig. 2 in schaubildlicher und vergrößerter Darstellung ein Detail der Fig. 1,
Fig. 3 eine Seitenansicht der Anordnung nach Fig. 2,
Fig. 4 einen Schnitt nach der Ebene IV-IV der Fig. 3,
Fig. 5 in einer in der KFZ-Technik üblichen Darstellung eine Lichtverteilung für einen Scheinwerfer nach dem Stand der Technik,
Fig. 6 und 7 in Darstellungen entsprechend Fig.3 und 4 ein Detail eines einer ersten Ausführungsform eines Scheinwerfers nach der Erfindung,
Fig. 8 eine Lichtverteilung für einen Scheinwerfer nach der erfindungsgemäßen ersten Ausführungsform,
Fig. 9 und 10 in Darstellungen entsprechend Fig.6 und 7 ein Detail eines einer zweiten Ausführungsform eines Scheinwerfers nach der Erfindung,
Fig. 11 eine Lichtverteilung für einen Scheinwerfer nach der erfindungsgemäßen zweiten Ausführungsform,
Fig. 12 und 13 in Darstellungen entsprechend Fig. 9 und 10 ein Detail eines einer dritten Ausführungsform eines Scheinwerfers nach der Erfindung,
Fig. 14 eine Lichtverteilung für einen Scheinwerfer nach der erfindungsgemäßen zweiten Ausführungsform
Fig. 15 eine schaubildliche Darstellung von links vorne und oben einer Sekundärlinse nach dem Stand der Technik,
Fig. 16 in einer Darstellung wie Fig. 15 einer Sekundärlinse nach einer ersten Ausführungsform der Erfindung,
Fig. 17 eine schaubildliche Darstellung von links vorne und unten einer Sekundärlinse nach einer zweiten Ausführungsform der Erfindung und
Fig. 18, 19 und 20 zu den Sekundärlinsen der Fig. 15, 16 und 17 gehörige Fernlichtverteilungen.

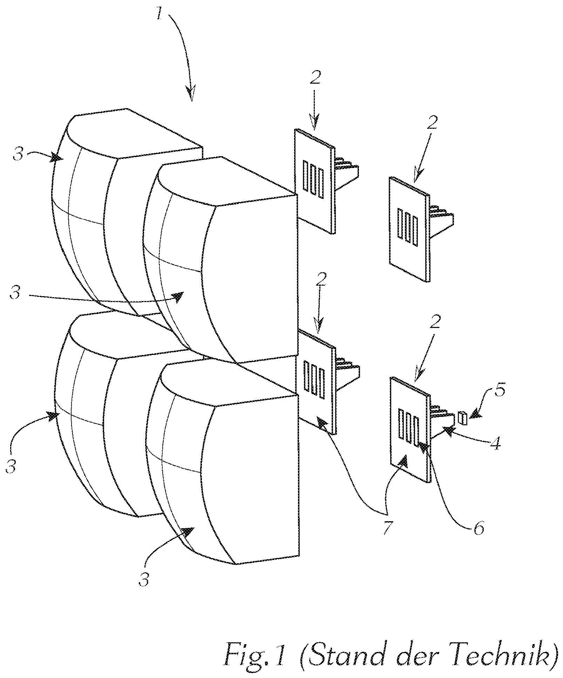

Unter Bezugnahme auf Fig. 1 wird nun ein Ausführungsbeispiel der Erfindung näher erläutert. Insbesondere sind die für einen erfindungsgemäßen Scheinwerfer wichtigen Teile dargestellt, wobei es klar ist, dass ein KFZ-Scheinwerfer noch viele andere Teile enthält, die seinen sinnvollen Einsatz in einem Kraftfahrzeug, wie insbesondere einem PKW oder Motorrad, ermöglichen. Wesentliche Bestandteile des Scheinwerfers 1 sind im vorliegenden Fall vier Primäroptikelemente 2 und vier Sekundärlinsen 3, wobei diese Teile, da hier identisch ausgeführt je mit gleichen Bezugszeichen versehen sind.

Jedes Primäroptikelement besteht im Prinzip im vorliegenden Fall aus drei Vorsatzoptiken 4, in welche Licht aus schematisch gezeichneten LED-Lichtquellen 5 von hinten, eingekoppelt und aus vorderen Lichtaustrittsflächen 6 austritt. Den LED-Lichtquellen 5 zugeordnete hintere Lichteintrittsflächen sind in dieser Darstellung nicht ersichtlich; die je drei Lichtaustrittsflächen 6 des Primäroptikelements 2 liegen in einer Lichtaustrittsebene 7. Insgesamt sind bei diesem Ausführungsbeispiel somit zwölf Lichtaustrittsflächen 6 vorhanden.

Die Verwendung von LEDs ist für die Erfindung nicht zwingend, es können auch andere Lichtquellen, beispielsweise Laserlichtquellen einschließlich solcher mit lichtkonvertierenden Elementen vorgesehen sein.

Vor den Primäroptikelementen 2 liegen vier Sekundärlinsen 3, wobei jedem Primäroptikelement 2 eine Sekundärlinse 3 zugeordnet ist.

Die Lichtaustrittsflächen 6 der Primäroptikelemente 2 sind bei der gezeigten Variante rechteckförmig ausgebildet und weisen identische Form auf. Außerdem sind die LED-Lichtquellen 5bzw. zumindest die Lichtaustrittsflächen der Primäroptiken parallel zueinander und mit identischer Ausrichtung angeordnet. Weiters sind die Primäroptiken, d.h. die Lichtaustrittsflächen, in einem horizontalen Abstand zueinander angeordnet, wobei alle benachbarten Lichtaustrittsflächen identische Abstände aufweisen.

Jedes der Primäroptikelemente 2 erzeugt zusammen mit ihren Lichtaustrittsflächen 7 eine Teil-Lichtverteilung, die über die Sekundärlinsen 3 auf die Straße projiziert werden, sodass sich die Lichtverteilung des Scheinwerfers aus der Überlagerung der hier zwölf Segmente ergibt. Dies wird weiter unten noch näher gezeigt.

Die in Fig. 1 gezeigte Anordnung von Elementen für einen Scheinwerfer 1 ist in der bereits oben genannten AT 508604 B1 der Anmelderin beschrieben und bildet einen Stand der Technik.

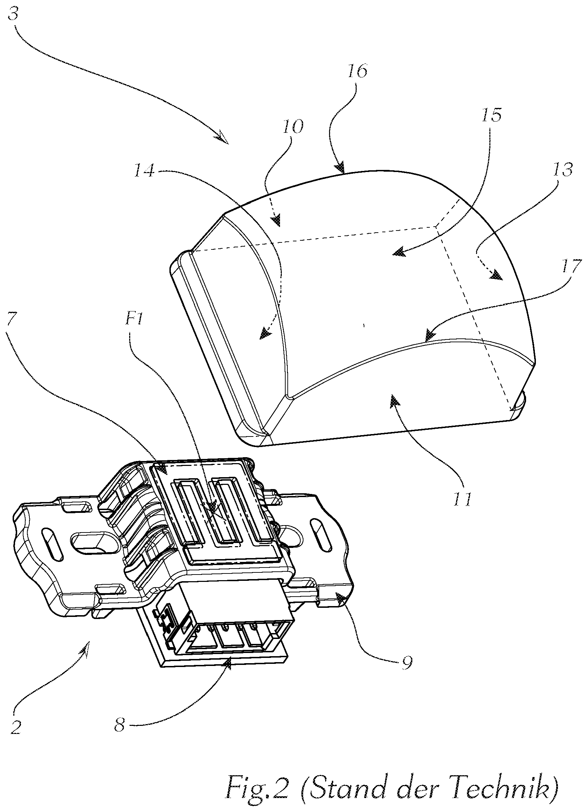

Es wird nun auf Fig. 2 Bezug genommen, welche in näherem Detail ein Primäroptikelement 2 und eine Sekundärlinse 3 zeigt. Bei dem Primäroptikelement 2 erkennt man eine Trägerplatte 8 für LEDs sowie eine Halterung 9 für das gesamte Element 2. Weiters ist die bereits in Fig. 1 gezeigte Lichtaustrittsebene 7 eingezeichnet, sowie der Brennpunkt F1 der Sekundärlinse 3.

Die Sekundärlinse 3 besitzt eine obere Begrenzungsfläche 10, eine untere Begrenzungsfläche 11 sowie zwei seitliche Begrenzungsflächen 12, 13, nämlich eine rechte und eine linke, wobei darauf hinzuweisen ist, dass die Begrenzungsflächen oft Designwünschen entsprechend gestaltet werden. Die verwendeten Begriffe "oben", "unten", "rechts" und "links" beziehen sich auf eine mögliche Einbauposition und sollen der Erleichterung der Beschreibung dienen, sind jedoch in keiner Weise einschränkend zu verstehen.

In Fig. 2 ist weiters eine hintere Lichteintrittsfläche mit dem Bezugszeichen14 versehen, wobei diese Fläche in den gezeigten Beispielen eben ist - aber nicht eben sein muss. Die vordere Lichtaustrittsfläche ist mit dem Bezugszeichen 15 versehen, wobei diese Fläche 15 im Allgemeinen und bevorzugt, nicht jedoch zwingend asphärisch ausgebildet ist.

Der Schnitt der oberen Begrenzungsfläche 10 mit der vorderen Lichtaustrittsfläche 15 ergibt eine obere Beschnittkante 16 und der Schnitt der unteren Begrenzungsfläche 11 mit der vorderen Lichtaustrittsfläche 15 eine untere Beschnittkante 17. Eine seitliche (rechte) Beschnittkante ist mit 18, eine seitliche (linke) Beschnittkante mit 19 bezeichnet, doch spielen die seitlichen Beschnittkanten 18, 19 - im Gegensatz zu der oberen bzw. unteren Beschnittkante 16 bzw. 17 - für die später zu beschreibende Erfindung nur eine untergeordnete Rolle.

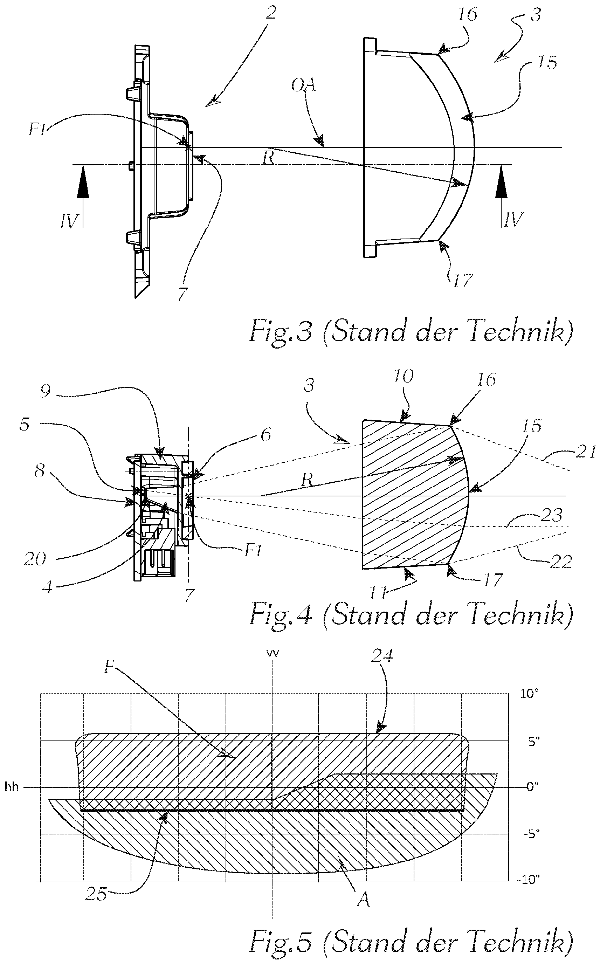

Nun auf Fig. 3 bezugnehmend erkennt man hier die in Fig. 2 gezeigten Teile, nämlich das Primäroptikelement 2 und die Sekundärlinse 3 in einer Seitenansicht, wobei die optische Achse OA eingezeichnet ist. Auch hier ist die Lichtaustrittsebene 7 des Primäroptikelements bezeichnet und wiederum mit F1 der Brennpunkt der Sekundärlinse 3. Eingezeichnet sind auch die obere Beschnittkante 16 sowie die untere Beschnittkante 17.

In Fig. 4 ist die Anordnung nach Fig. 3 zu sehen, jedoch in einem Schnitt nach der Linie IV-IV der Fig. 3. Für gleiche Teile wurden gleiche Bezugszeichen wie in den Fig. 1 bis 3 verwendet, wobei zusätzlich die Lichteintrittsfläche 20 einer Vorsatzoptik 4 bezeichnet ist. Außerdem ist ein oberer Randstrahl 21, welcher durch die obere Beschnittkante 16 verläuft, eingezeichnet, ebenso ein unterer Randstrahl 22, welcher durch die untere Beschnittkante verläuft sowie ein Brennpunktstrahl 23. Dieser Brennpunktstrahl 23 breitet sich nach dem Durchtritt durch die Sekundärlinse 3 parallel zur optische Achse OA aus.

In Fig. 5 ist die beispielsweise auf einen Messschirm (z.B. in 25 m Entfernung) erzeugte Gesamtlichtverteilung eines Kraftfahrzeuges eingezeichnet, welche sich als Fernlichtverteilung F und aus einer Abblendlichtverteilung A zu einem gesamten Lichtbild zusammensetzt. Die Fernlichtverteilung F wird durch eine Anordnung, wie vorangehend beschrieben, erzeugt, wogegen die Abblendlichtverteilung A von einem hier nicht weiter betrachteten Licht- bzw. Scheinwerfersystem erzeugt wird. Man erkennt in dem dargestellten Lichtbild eine obere Grenze 24 der Fernlichtverteilung F, welche beispielsweise die Position der 11x -Linie ist, wobei diese obere Grenze 24 durch den Randstrahl 22 (s. Fig. 4) bestimmt wird. Eine scharfe Lichtlinie 25 entsteht durch den Randstrahl 21, welcher durch die Beschnittkante 16 verläuft. Genau diese Lichtlinie 25, die von einem Fahrer des Fahrzeugs auf der Straße als heller und störender Strich wahrgenommen wird, soll als unerwünschter Faktor in der Lichtverteilung vermieden werden und eine Möglichkeit nach der Erfindung, hier Abhilfe zu schaffen ist, in den folgenden Figuren dargestellt.

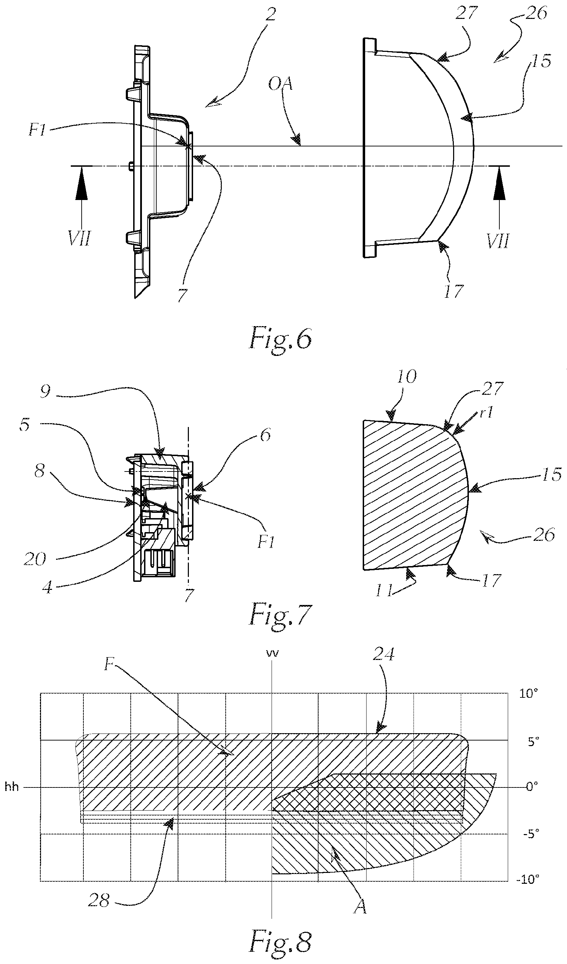

Fig. 6 und 7 zeigen im Wesentlichen gleiche Darstellungen des Primäroptikelementes 2 und der Sekundärlinse 3 wie in den Fig. 3 und 4, wobei auch gleiche Bezugszeichen für gleiche Teile und Merkmale verwendet werden. Im Unterschied zu der in den Fig. 3 und 4 gezeigten Sekundärlinse 3 besitzt hier die Sekundärlinse 26 im Übergangsbereich der oberen Begrenzungsfläche 10 mit der vorderen Lichtaustrittsfläche 15 eine Kantenverrundung 27 bzw. Übergangsfläche, deren Krümmungsradius mit r₁ bezeichnet ist.

Fläche der Kantenverrundung 27 soll G2-Stetigkeit (Krümmungsstetigkeit) aufweisen. Besonders gute Resultate erhält man indes, wenn die Kantenverrundung G2-Stetigkeit (Krümmungsstetigkeit) aufweist, um störende Artefakte im erzeugten Lichtbild zu vermeiden., Fig. 8 zeigt wiederum, ebenso wie Fig. 5, eine gesamte Lichtverteilung, bestehend aus einer Fernlichtverteilung F und einer Abblendlichtverteilung A (letztere ist nur auf der rechten Seite des Lichtbildes eingezeichnet), wobei man erkennt, dass nun die helle und störende Lichtlinie 25 gemäß Fig. 5 nicht mehr auftritt, stattdessen jedoch ein verbreiteter oder "verschmierter" Lichtstreifen 28, welcher auf die Kantenverrundung 27 zurückzuführen ist. Somit wird die scharfe Unterbegrenzung der Matrix-Fernlichtverteilung über einen bestimmten Winkelbereich verschmiert und tritt als Lichtstreifen 28 auf, da die Randlichtstrahlen den Messschirm (bzw. eine Straße) in unterschiedlichen vertikalen Positionen treffen. Im Vergleich zu der Ausgangssituation nach dem Stand der Technik (s. Fig. 3 bis 5) entsteht eine weiche untere Begrenzung der Fernlichtverteilung F. Man kann dies auch so ausdrücken, dass die

Kantenverrundung 27 bzw. die Übergangsfläche als defokussierende Linse wirkt, da sie einen anderen Brennpunkt aufweist.

Die Ausführungsform der Erfindung gemäß den Fig. 6 bis 8 wurde an einer Sekundärlinse mit einer Schnittweite von 80mm und einem Krümmungsradius R von etwa 60 mm untersucht.

| "Verrundung" OBEN | Relation zu Sekundärlinse | Höhenanteil Verhältnis zur halben Linsenhöhe |
|---|---|---|
| 5mm | 5mm/60mm = 8,3% | 3,75mm/20mm = 18% |
| 10mm | 10mm/60mm = 16,7% | 9,50mm/ 20mm; ca.45 % |

Bei diesen Werten ergaben sich gute Resultate hinsichtlich der "Verschmierung" der Lichtlinie 25, doch empfiehlt es sich, die optimalen Krümmungsradien der Verrundung für bestimmte Sekundärlinsen durch optische Simulationsrechnungen zu bestimmen, welche rasch Resultate liefern, wie beispielsweise in Fig. 5 dargestellt.

Bei dem zuvor beschriebenen Ausführungsbeispiel entsteht der unerwünschte Lichtstreifen 28 in dem Lichtbild (siehe Fig. 5) durch die obere Beschnittkante 16. Es sei jedoch ausdrücklich darauf hingewiesen, dass eine solche Lichtlinie auch durch Begrenzungen im Strahlengang entstehen kann, nämlich beispielsweise durch Blenden, die im Strahlengang zwischen der Vorsatzoptik 4 und der Sekundärlinse 3 liegen, hier jedoch nicht eingezeichnet sind. Ebenso können solche Lichtlinien auch von Lichtstrahlen hervorgerufen werden, welche durch eine Austrittskante der Vorsatzoptik gehen. Man spricht in diesen Fällen einer Bündelbegrenzung bzw. einer Beschränkung der Lichtstrahlen, von einer Aperturblende des optischen Systems.

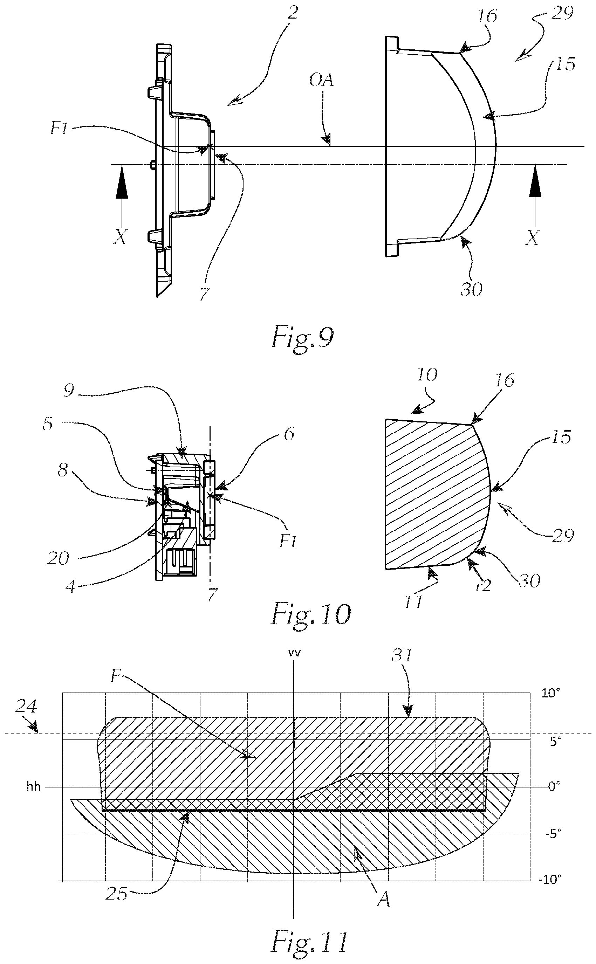

Im Folgenden wird unter Bezugnahme auf die Fig. 9 und 10 eine andere Ausführungsform der Erfindung erläutert, welche zum Ziel hat, die obere Grenze der Fernlichtverteilung zu erhöhen. Auch hier zeigen die Figuren im Wesentlichen gleiche Darstellungen des Primäroptikelementes 2 und der Sekundärlinse 3, wie bei dem vorangegangenen Beispiel und auch hier werden gleiche Bezugszeichen für gleiche Teile und Merkmale verwendet. Gegenüber der in den Fig. 6 und 7 gezeigten Sekundärlinse 26 zeigt die hier dargestellte Sekundärlinse 29 eine Kantenverrundung 30 bzw. Übergangsfläche im Übergangsbereich der unteren Begrenzungsfläche 11 mit der vorderen Lichtaustrittsfläche 15, wobei hier der Krümmungsradius mit r₂ bezeichnet ist. Auch hier sollte die Fläche der Kantenverrundung 30 eine G2-Stetigkeit aufweisen und für den Übergangsbereich von der Kantenverrundung zu der Linsenaustrittsfläche gilt sinngemäß dasselbe wie zu der vorhin beschriebenen Ausführungsform.

In Fig. 11 ist nun die gesamte Lichtverteilung aus einer Fernlichtverteilung F und einer Abblendlichtverteilung A gezeigt und man erkennt, dass zufolge der nicht abgerundeten oberen Beschnittkante 16 eine Lichtlinie 25 entsprechend der Darstellung nach Fig. 5 vorhanden ist, jedoch zufolge der unteren Kantenverrundung 30 eine neue, höher gelegene obere Grenze 31 der Fernlichtverteilung entsteht, was man aus der strichliert eingezeichneten oberen Grenze 24 der Fernlichtverteilung nach Fig. 5 (ohne untere Kantenverrundung) erkennt.

Die Ausführungsform der Erfindung gemäß den Fig. 9 bis 11 wurde an einer Sekundärlinse mit einer Schnittweite von 45mm und einem Krümmungsradius R von etwa 40 mm untersucht, wobei es sich nur um eine beispielhafte Versuchsanordnung von vielen handelt.

| "Verrundung" UNTEN | Relation zu Sekundärlinse | Höhenanteil Verhältnis zur halben Linsenhöhe |
|---|---|---|
| 5mm | 5mm/40mm = 12,5% | 2,875mm/20mm = ca. 15% |
| 10mm | 10mm/40mm = 25% | 6,50mm/20mm; ca. 30 -35% |

Bei diesen Werten ergaben sich gute Resultate hinsichtlich der Vergrößerung (Anhebung) der Fernlichthöhe, wie in Fig. 11 gezeigt. Auch hier empfiehlt es sich, die optimalen Krümmungsradien der Verrundung für bestimmte Sekundärlinsen experimentell zu bestimmen.

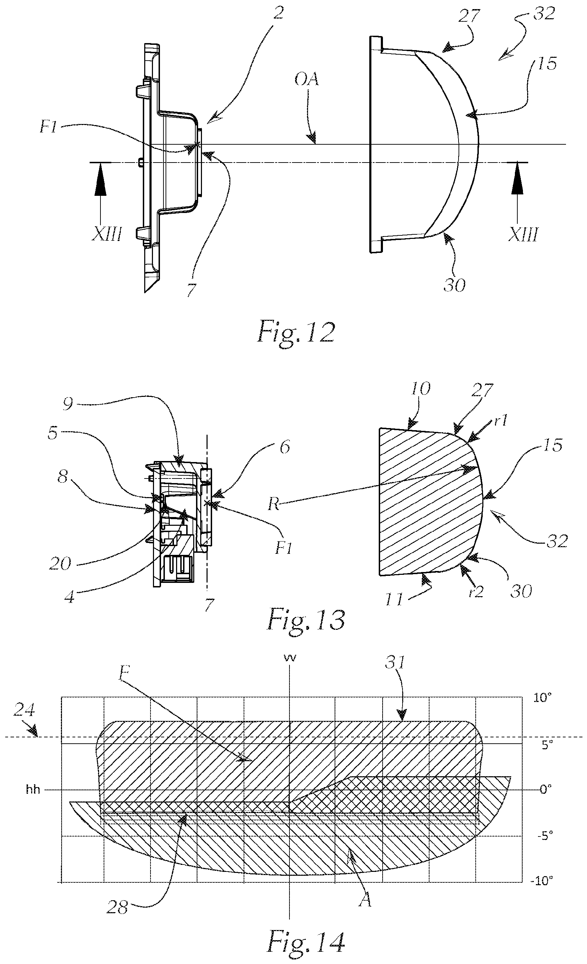

Nun soll anhand der Fig. 12 bis 14 gezeigt werden, dass selbstverständlich die Möglichkeit besteht, einerseits den Lichtstreifen zu "verschmieren" und andererseits die obere Grenze der Fernlichtverteilung zu erhöhen. Die Darstellungen des Primäroptikelementes 2 und der Sekundärlinse 3 entsprechen wieder prinzipiell den vorangegangenen Darstellungen der Fig. 3 und 4 bzw. der Fig. 6 und 7, jedoch mit dem Unterschied, dass nun sowohl eine obere Kantenverrundung 16 als auch eine untere Kantenverrundung 30 an der Sekundärlinse 32 vorgesehen sind.

Fig. 14 zeigt das sich zwingendermaßen ergebende Lichtbild, welches ein Scheinwerfer liefert, der eine Sekundärlinse 32 mit den genannten Kantenverrundungen aufweist. Dementsprechend zeigt das Lichtbild einen verbreiterten bzw. verschmierten Lichtstreifen 18 anstelle einer scharfen Lichtlinie 25 und eine erhöhte obere Grenze 31 der Fernlichtverteilung.

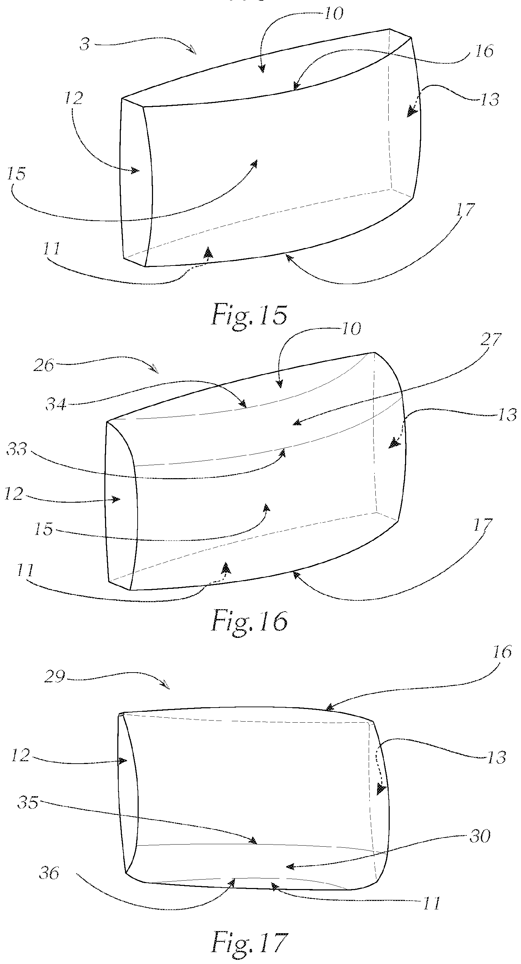

Zur besseren Übersicht sind in den Fig. 15, 16 und 17 nochmals in isometrischen Ansicht die Sekundärlinse 3 entsprechend dem Stand der Technik, die Sekundärlinse 7 entsprechend der ersten Ausführungsform nach Fig. 6 und 7 und die Sekundärlinse 29 entsprechend der zweiten Ausführungsform nach Fig. 9 und 10 dargestellt, wobei für gleiche Teile und Merkmale wiederum gleiche Bezugszeichen verwendet wurden.

Bei der Sekundärlinse 26 nach Fig. 16 ist die Grenze 33 zwischen der Lichtaustrittsfläche 15 und der Kantenverrundung 27 ebenso eingezeichnet, wie die Grenze 34 zwischen der Kantenverrundung 27 zur oberen Begrenzungsfläche 10 der Sekundärlinse.

In ähnlicher Weise ist bei der Sekundärlinse 29, die in Fig. 17 dargestellt ist, die Grenze 35 zwischen der Lichtaustrittsfläche 15 und der Kantenverrundung 30 eingezeichnet und auch die Grenze 36 zwischen der Kantenverrundung 30 und der unteren Linsenbegrenzungsfläche'11.

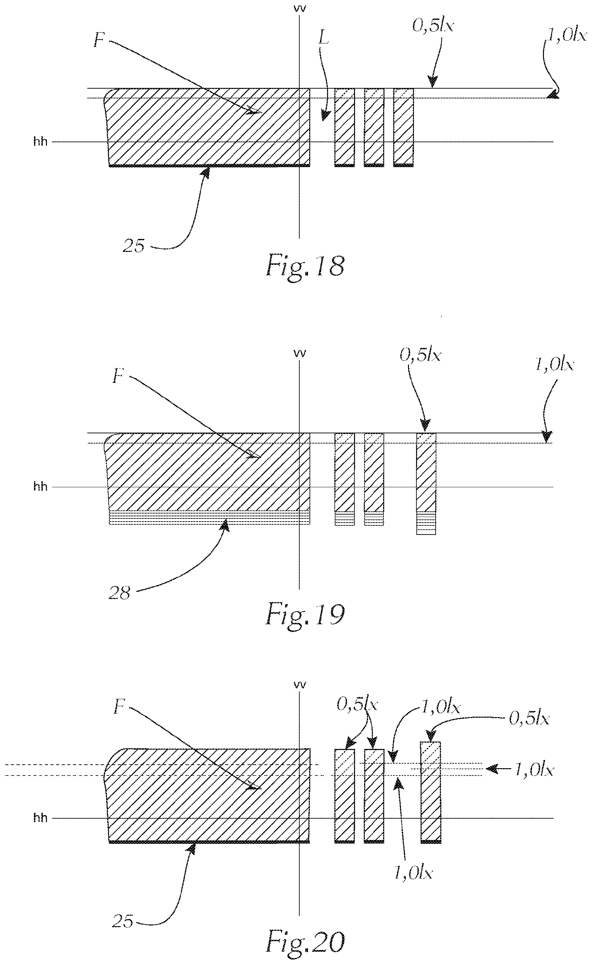

In den Fig. 18, 19 und 20 sind schematische Lichtbilder gezeichnet, die von Sekundärlinsen entsprechend den Fig. 15,16 und 17 erzeugt werden. Im Einzelnen sei dazu folgendes erklärt. Fig. 18 zeigt in der linken Hälfte die Fernlichtverteilung F, die von einer Matrixanordnung (siehe Fig. 1) bei Verwendung einer Sekundärlinse nach dem Stand der Technik (Fig. 15) erzeugt wird, wobei in der rechten Hälfte der Fig. 18 einige Segmente eingezeichnet sind, welche den Lichtaustrittsflächen 6 in Fig. 1 entsprechen. Es sind auch obere 1,0 lx und 0,5 lx Grenzen der Fernlichtverteilung eingezeichnet und ebenso die nach dem Stand der Technik entstehende unerwünschte Lichtlinie 25. Im vorliegenden Fall ist auch eine durch entsprechende Aktvierung bzw. Nicht-Aktivierung von LED Lichtquellen erzeugte Ausblendlücke L eingezeichnet, die erzeugt wurde, um beispielsweise ein entgegenkommendes Fahrzeug oder einen Fußgänger nicht zu blenden.

Eine sinngemäße Darstellung, jedoch für eine Sekundärlinse 26 mit oberer Verrundung ist in Fig. 19 zu sehen, wobei man auch den Lichtstreifen 28 erkennt, der durch die obere Kantenverrundung hervorgerufen wird.

Schließlich zeigt Fig. 20 wiederum sinngemäß eine Lichtverteilung, die bei Verwendung einer Sekundärlinse 29 mit einer unteren Kantenverrundung auftritt, wobei bei dieser Linse jedoch die obere Kantenverrundung fehlt, so dass wieder die helle Lichtlinie 25 im Lichtbild zu sehen ist, jedoch eine erhöhte obere Grenze der Fernlichtverteilung F gegenüber den beiden zuvor gezeigten Lichtbildern auftritt. Die verschiedenen Grenzen, auch für die erzeugten Segmente sind hier für ein Messbeispiel mit Beleuchtungsstärken in lx eingezeichnet.

Es sollte klar sein, dass dabei stärkere Kantenverrundungen ein größeres Ausmaß z.B. der Fernlichthöhe ergeben, sodass man es in der Hand hat, über die Größe der Kantenverrundung die Erhöhung der oberen Grenze zu steuern. Sinngemäß gleiches gilt für die obere Kantenverrundung, bei welcher eine größere Verrundung zu einer breiteren Verschmierung der unerwünschten Lichtlinie führt.

Die Erfindung ist prinzipiell für Scheinwerfer anwendbar, welche eine Sekundärlinse zur Abbildung eines Lichtbildes besitzen. Anhand der Fig. 1 ist ein Scheinwerfer mit Matrixmodulen, nämlich Primäroptikelementen 2, gezeigt, doch kann die Erfindung ebenso bei sogenannten "Pixelsystemen" angewendet werden, da dort prinzipiell der gleiche Strahlengang mit den gleichen Problemen scharfer Hell/ Dunkel-Grenzen auftritt.

Bei den Ausführungsbeispielen sind plan-konvexe Sekundärlinsen gezeigt, doch sollte es klar sein, dass die Erfindung nicht auf solche beschränkt ist. Vielmehr können beispielsweise auch bikonvexe Sekundärlinsen zum Einsatz kommen, wobei die Lichteintrittsflächen zumeist sphärische Form mit relativ großen Krümmungsradien, nämlich typischerweise mindestens 125 mm, besitzen.

Wie bereits mehrfach erwähnt, ist es wesentlich, dass die erfindungsgemäßen Verrundungen G1-Stetigkeit und G2-Stetigkeit aufweisen. Für die Übergänge der seitlichen Begrenzungsflächen 12 und 13 (s. Fig. 2) zu der vorderen Lichtaustrittsfläche einer Sekundärlinse sind solche Stetigkeitsanforderungen im Allgemeinen nicht gegeben, hier wird üblicherweise eine G0-Stetigkeit (Positionsstetigkeit oder Punktstetigkeit) ausreichend sein.

## Patentansprüche

1. Scheinwerfer (1) für Fahrzeuge,
mit zumindest einem Primäroptikelement (2), welches zumindest eine Lichtaustrittsfläche (6) für Licht zumindest einer Lichtquelle (5) aufweist,
mit zumindest einer, dem zumindest einen Primäroptikelement zugeordneten Sekundärlinse (3) zur Abbildung der zumindest einen Lichtaustrittsfläche als Lichtbild auf die Straße,
wobei die zumindest eine Sekundärlinse eine bevorzugt asphärische vordere Lichtaustrittsfläche (15), eine hintere Lichteintrittsfläche (14) sowie im Wesentlichen ebene Begrenzungsflächen (10,11,12,13) zwischen der vorderen Lichtaustrittsfläche und der hinteren Lichteintrittsfläche besitzt, **dadurch gekennzeichnet, dass** im Übergangsbereich einer oberen und/oder unteren Begrenzungsfläche (10, 11) mit der vorderen Lichtaustrittsfläche (15) eine Kantenverrundung (27, 30) vorgesehen ist, deren Fläche G1-stetig ist,
wobei die Kantenverrundung (27, 30) im Übergangsbereich einer oberen und/oder unteren Begrenzungsfläche (10,11) mit der vorderen Lichtaustrittsfläche (15) G2-stetig ist,
wobei der Krümmungsradius (r1, r2) im Bereich von 2 bis 30 % des Krümmungsradius (R) der Lichtaustrittsfläche (15) der zumindest einen Sekundärlinse liegt.

2. Scheinwerfer Anspruch 1, **dadurch gekennzeichnet, dass** die Kantenverrundung (27) im Übergangsbereich einer oberen Begrenzungsfläche (10) mit der vorderen Lichtaustrittsfläche (15) ausgebildet ist.

3. Scheinwerfer nach Anspruch 1 oder 2, **dadurch gekennzeichnet, dass** die Kantenverrundung (27) im Übergangsbereich einer unteren Begrenzungsfläche (11) mit der vorderen Lichtaustrittsfläche (15) ausgebildet ist.

4. Scheinwerfer nach Anspruch 1 oder 2, **dadurch gekennzeichnet, dass** eine Mehrzahl von Primäroptikelementen (4) mit je mehreren Lichtaustrittsflächen (6) vorgesehen ist, wobei jedem Primäroptikelement eine Sekundärlinse (3) zugeordnet ist.

5. Scheinwerfer nach Anspruch 4, **dadurch gekennzeichnet, dass** jedes Primäroptikelement (4) Vorsatzoptiken (4) besitzt, in welche Licht aus LED-Lichtquellen (5) von hinten eingekoppelt aus den vorderen Lichtaustrittsflächen (6) austritt.

## Claims

1. Headlamp (1) for vehicles,
having at least one primary optics element (2), which comprises at least one light-exit surface (6) for light from at least one light source (5),
having at least one secondary lens (3) associated with the at least one primary optics element and configured to image the at least one light-exit surface onto the road as a light image, wherein the at least one secondary lens has a preferably aspherical front light-exit surface (15), a rear light-entry surface (14), and substantially planar boundary surfaces (10, 11, 12, 13) located between the front light-exit surface and the rear light-entry surface,
**characterised in that**
a fillet (27, 30) is provided in the transition area of an upper and/or lower boundary surface (10, 11) to the front light-exit surface (15), the fillet having a surface which is G1-continuous, wherein the fillet (27, 30) in the transition region of an upper and/or lower boundary surface (10, 11) to the front light-exit surface (15) is G2-continuous,
wherein the radius of curvature (r1, r2) is in the range from 2 to 30% of the radius of curvature (R) of the light-exit surface (15) of the at least one secondary lens.

2. Headlamp according to claim 1, **characterized in that** the fillet (27) is realized in the transition region of an upper boundary surface (10) with the front light-exit surface (15).

3. Headlamp according to claim 1 or 2, **characterised in that** the fillet (30) is realized in the transition region of a lower boundary surface (11) with the front light-exit surface (15).

4. Headlamp according to claim 1 or 2, **characterised in that** a plurality of primary optics elements (4)is provided, each having multiple light emitting surfaces (6), with each primary optics element being associated a secondary lens (3).

5. Headlamp according to claim 4, **characterised in that** each primary optics element (4) includes auxiliary optics (4) into which light from LED light sources (5) is coupled from behind and emerges from the front light exit surfaces (6).

## Revendications

1. Projecteur (1) pour véhicules,
comportant au moins un élément optique primaire (2), comprenant au moins une surface de sortie de la lumière (6) pour de la lumière provenant d'au moins une source lumineuse (5), comportant au moins une lentille secondaire (3) associée audit au moins un élément optique primaire pour représenter ladite au moins une surface de sortie de la lumière sous la forme d'une image lumineuse sur la route,
dans laquelle ladite au moins une lentille secondaire a une surface de sortie de la lumière frontale (15) de préférence asphérique, une surface d'entrée de lumière arrière (14) et des surfaces de délimitation (10, 11, 12, 13) sensiblement planes entre la surface de sortie de la lumière frontale et la surface d'entrée de lumière arrière,
**caractérisé en ce que**
dans la zone de transition d'une surface de délimitation supérieure et/ou inférieure (10, 11) avec la surface de la sortie de la lumière frontale (15), un arrondi de bord (27, 30) est prévu, dont la surface est continue de type G1,
ledit arrondi des bords (27, 30) dans la zone de transition d'une surface limite supérieure et/ ou inférieure (10, 11) avec la surface de sortie de la lumière frontale (15) est continu de type G2, dans lequel le rayon de courbure (r1, r2) est compris entre 2 et 30 % du rayon de courbure (R) de la surface d'émission de lumière (15) de ladite au moins une lentille secondaire.

2. Projecteur selon la revendication 1, **caractérisé en ce que** l'arrondi des bords (27) est formé dans la zone de transition d'une surface de délimitation supérieure (10) avec la surface de la sortie de la lumière frontale (15).

3. Projecteur selon la revendication 1 ou 2, **caractérisé en ce que** l'arrondi des bords (30) est formé dans la zone de transition d'une surface de délimitation inférieure (11) avec la surface de la sortie de la lumière frontale (15).

4. Projecteur selon la revendication 1 ou 2, **caractérisé en ce que** plusieurs éléments optiques primaires (4) sont prévus, ayant chacun plusieurs surfaces d'émission de lumière (6), une lentille secondaire (3) étant associée à chaque élément optique primaire.

5. Projecteur selon la revendication 4, **caractérisé en ce que** chaque élément optique primaire (4) comporte une optique préfixée (4) dans laquelle de la lumière émise des sources lumineuses à LED (5) est couplée par l'arrière et sort par les surfaces de sortie de lumière frontale (6).
